(19) Europäisches Patentamt
European Patent Office
Office européen des brevets

(11) **EP 4 734 177 A1**

(12) **EUROPEAN PATENT APPLICATION**
published in accordance with Art. 153(4) EPC

(43) Date of publication:
**29.04.2026 Bulletin 2026/18**

(21) Application number: **24913504.7**

(22) Date of filing: **23.12.2024**

(51) International Patent Classification (IPC):
*H01M 4/36* (2006.01)    *H01M 4/38* (2006.01)
*H01M 4/48* (2010.01)    *H01M 4/62* (2006.01)
*H01M 4/133* (2010.01)    *H01M 10/052* (2010.01)
*H01M 4/02* (2006.01)

(52) Cooperative Patent Classification (CPC):
**H01M 4/02; H01M 4/133; H01M 4/36; H01M 4/38;
H01M 4/48; H01M 4/62; H01M 10/052;** Y02E 60/10

(86) International application number:
**PCT/KR2024/020932**

(87) International publication number:
**WO 2025/143711 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.12.2023 KR 20230190996**

(71) Applicant: **LG Energy Solution, Ltd.
Seoul 07335 (KR)**

(72) Inventors:
• **LEE, Jaewook**
  **Daejeon 34122 (KR)**
• **KO, Minjin**
  **Daejeon 34122 (KR)**
• **KWON, Yohan**
  **Daejeon 34122 (KR)**

(74) Representative: **Hoffmann Eitle
Patent- und Rechtsanwälte PartmbB
Arabellastraße 30
81925 München (DE)**

(54) **ANODE ACTIVE MATERIAL, ANODE COMPOSITION, LITHIUM SECONDARY BATTERY ANODE COMPRISING SAME, AND LITHIUM SECONDARY BATTERY COMPRISING ANODE**

(57)    The present application relates to a negative electrode active material, a negative electrode composition, a negative electrode for a lithium secondary battery including the same, and a lithium secondary battery including the negative electrode.

[Figure 1]

**Description**

[Technical Field]

This application claims priority to and the benefit of Korean Patent Application No. 10-2023-0190996 filed in the Korean Intellectual Property Office on December 26, 2023, the entire contents of which are incorporated herein by reference.

The present application relates to a negative electrode active material, a negative electrode composition, a negative electrode for a lithium secondary battery including the same, and a lithium secondary battery including the negative electrode.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, as the demand for high-density energy batteries has been recently increased, studies have been actively conducted on a method of increasing the capacity using a silicon-based compound, which has a capacity 10-fold higher than that of a graphite-based material as a negative electrode active material, but a silicon-based compound, which is a high-capacity material, has a higher capacity than graphite used in the related art, but has a problem in that the volume rapidly expands in the charging process to disconnect the conductive path, resulting in deterioration in battery characteristics.

Thus, to solve problems when the silicon-based compound is used as a negative electrode active material, measures to adjust the driving potential, additionally, measures to suppress the volume expansion itself such as methods of further coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate, so that there is still a limitation in the commercialization of preparation of a battery having a negative electrode with a high content of the silicon-based compound.

In addition, the silicon-based negative electrode active material has a problem in that it is highly irreversible and thus has low initial efficiency. To overcome this problem, a method of increasing the initial efficiency by doping a silicon-based active material with lithium is known, and it has been confirmed through research that the method has an effect of improving cycle performance. However, such highly efficient silicon-based active materials have a risk of explosion due to the generation problem of $H_2$ gas during the preparation and storage of a slurry, and have a problem in that the phase stability of the slurry also deteriorates.

Therefore, there is a need for research on a negative electrode active material itself capable of preventing the conductive path from being damaged according to the volume expansion of the silicon-based compound even when the silicon-based active material is used as a negative electrode active material in order to improve the capacity performance, and having stability by solving the problem of hydrogen gas generation during the preparation and storage of a slurry.

<Related Art Document>

Japanese Patent Application Laid-Open No. 2009-080971

[Detailed Description of the Invention]

[Technical Problem]

As a result of research into the amount of hydrogen gas generated to solve problems such as stability and gas defects in a process of manufacturing an electrode from a negative electrode slurry containing a silicon-based active material, it has been found through research that when a coating layer is formed on the surface of the silicon-based active material and a coating layer is formed with a specific thickness compared to the average particle diameter (D50) of the silicon-based active material, the pH of the negative electrode active material may vary, and as a result, the stability of the slurry can be improved.

Accordingly, the present application relates to a negative electrode active material, a negative electrode composition, a negative electrode for a lithium secondary battery including the same, and a lithium secondary battery including the negative electrode, which can solve the above-described problems.

[Technical Solution]

An exemplary embodiment of the present specification provides a negative electrode active material including: a silicon-based active material; and a coating layer provided on a surface of the silicon-based active material, in which the coating layer includes a carbon-based material, and a thickness of the coating layer satisfies the following Equation 1:

Silicon-based active material average particle diameter (D50) / 70 < Thickness of coating layer < Silicon-based active material average particle diameter (D50) / 10      [Equation 1]

Another exemplary embodiment is intended to provide a negative electrode composition including: the negative electrode active material according to the present application; a negative electrode conductive material; and a negative electrode binder.

Still another exemplary embodiment is intended to provide a negative electrode for a lithium secondary battery, including: a negative electrode current collector layer; and a negative electrode active material layer provided on one surface or both surfaces of the negative electrode current collector layer, in which the negative electrode active material layer includes the negative electrode composition according to the present application or a cured product thereof.

Finally, provided is a lithium secondary battery including: a positive electrode; the negative electrode for a lithium secondary battery according to the present application; a separator provided between the positive electrode and the negative electrode; and an electrolyte.

[Advantageous Effects]

Since a negative electrode slurry including a silicon-based active material has a risk of explosion due to the generation problem of $H_2$ gas during the preparation and storage, a problem in that the phase stability also deteriorates occurred. Thus, the negative electrode active material of the present invention is mainly characterized in that a coating layer having a thickness of Equation 1 compared to the average particle diameter of a silicon-based active material is formed on the surface of the silicon-based active material.

By having a carbon-based coating layer having a thickness represented by Equation 1 as described above, the pH of the negative electrode active material itself can be adjusted to 5 or more and 9 or less, and the pH of the negative electrode active material affects a binder included in the negative electrode slurry and the stability of the slurry, so that the amount of gas generation in the negative electrode slurry state can deteriorate, and accordingly, the negative electrode active material of the present invention is mainly characterized in that the phase is stabilized and the risk of explosion is reduced.

[Brief Description of Drawings]

FIG. 1 is a view illustrating the stacking structure of a negative electrode for a lithium secondary battery according to an exemplary embodiment of the present application.

FIG. 2 is a view illustrating the stacking structure of a lithium secondary battery according to an exemplary embodiment of the present application.

FIG. 3 is a view illustrating a method of calculating the size of crystal grains.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less.'

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present application, the particle size or particle diameter may mean the average diameter or representative diameter of each grain forming a metal powder.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer.'

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode active material including a silicon-based active material; and a coating layer provided on a surface of the silicon-based active material, in which the coating layer includes a carbon-based material, and a thickness of the coating layer satisfies the following Equation 1:

Silicon-based active material average particle diameter (D50) / 70 < Thickness of coating layer < Silicon-based active material average particle diameter (D50) / 10      [Equation 1]

Since a negative electrode slurry including a silicon-based active material has a risk of explosion due to the generation problem of $H_2$ gas during the preparation and storage, a problem in that the phase stability also deteriorates occurred.

Thus, the negative electrode active material of the present invention is mainly characterized in that a coating layer having a thickness of Equation 1 compared to the average particle diameter of a silicon-based active material is formed on the surface of the silicon-based active material.

Hereinafter, the negative electrode active material will be described in more detail.

In the present application, the silicon-based active material provides a negative electrode active material including one or more selected from the group consisting of SiOx (x=0), SiOx (0<x<2), Si/C, and a Si alloy.

That is, the present application is intended to solve the problem of using a silicon-based active material with high efficiency and capacity, and any silicon-based active material may be used without limitation as long as it is used in the art.

In the present application, Si/C is a silicon carbon composite, and is different from silicon carbide, which is SiC. That is, silicon carbide is a material that cannot function as an active material, and when the heat treatment temperature exceeds a certain range or higher during the process of forming a coating layer on the surface of Si/C, silicon carbide (SiC) is formed, and there is a difference between SiC and the negative electrode active material of the present invention (silicon-based active material + coating layer). That is, in the present application, when the silicon-based active material has Si/C and a coating layer, this is a case where a coating layer is formed on the surface of a silicon carbon composite, and is different from the case of silicon carbide (SiC).

In an exemplary embodiment of the present application, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In an exemplary embodiment of the present application, the silicon-based active material includes SiOx (x=0), and may include 70 parts by weight or more of the SiOx (x=0) based on 100 parts by weight of the silicon-based active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, the silicon-based active material including particularly pure silicon (Si) particles may be used as the silicon-based active material. The use of pure silicon (Si) particles as the silicon-based active material may mean that based on the total 100 parts by weight of the silicon-based active material as described above, pure Si particles (SiOx (x=0)), which are not bound to other particles or elements, are included in the above range.

In an exemplary embodiment of the present application, the silicon-based active material may be composed of silicon-based particles having 100 parts by weight of SiOx (x=0) based on 100 parts by weight of the silicon-based active material.

In an exemplary embodiment of the present application, the silicon-based active material may include metal impurities, and in this case, the impurities are metals which may be generally included in the silicon-based active material, and may be specifically included in an amount of 0.1 part by weight or less based on 100 parts by weight of the silicon-based active material.

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

Therefore, the present invention has solved the existing problems by adjusting the size of crystal grains or surface area of the silicon-based active material itself rather than adjusting the compositions of the conductive material and the binder in order to solve the aforementioned problems while using only the silicon-based active material as a negative electrode active material in order to improve the capacity performance.

In an exemplary embodiment of the present application, the silicon-based active material may have a crystal grain size of 200 nm or less.

In another exemplary embodiment, the silicon-based active material may have a crystal grain size of 200 nm or less, preferably 130 nm or less, more preferably 110 nm or less, even more preferably 100 nm or less, specifically 95 nm or less, and more specifically 91 nm or less. The silicon-based active material may have a crystal grain size range of 10 nm or more, preferably 15 nm or more.

The silicon-based active material has the crystal grain size described above, and the crystal grain size of the silicon-based active material may be adjusted by changing the process conditions in the preparation process. In this case, the grain boundary is widely distributed by satisfying the above range, so that during the intercalation of lithium ions, lithium ions may uniformly enter, which may reduce the stress that is applied when lithium ions are intercalated into silicon particles, thereby alleviating cracking of the particles. As a result, the silicon-based active material has a feature capable of improving the service life stability of the negative electrode. When the crystal grain size exceeds the above range, the grain boundaries in the particles are narrowly distributed, and in this case, lithium ions are non-uniformly intercalated into the particles, so that particle cracking occurs because the stress caused by the intercalation of ions is large.

In an exemplary embodiment of the present application, provided is a negative electrode active material in which the silicon-based active material includes a crystal structure having a crystal grain distribution of 1 nm or more and 200 nm or less, and the area ratio of the crystal structure is 5% or less based on the total area of the silicon-based active material.

In another exemplary embodiment, the area ratio of the crystalline structure may be 5% or less or 3% or less, and may be 0.1% or more based on the total area of the silicon-based active material.

That is, the silicon-based active material according to the present application has a crystal grain size of 200 nm or less, and the size of each crystal structure is small, and the aforementioned area ratio may be satisfied. Accordingly, the distribution of grain boundaries may be widened, and accordingly, the above-described effect may be exhibited.

In an exemplary embodiment of the present application, provided is a negative electrode active material in which the number of crystal structures included in the silicon-based active material is 20 or more.

In another exemplary embodiment, the number of crystal structures included in the silicon-based active material may be 20 or more, 30 or more, or 35 or more, and may satisfy a range of 60 or less, or 50 or less.

That is, as described above, when the size of crystal grains satisfies the above range and the number of crystal structures also satisfies the above range, the strength of the silicon-based active material itself has an appropriate range, so that the silicon-based active material has a feature capable of imparting flexibility when included in electrodes and also has a feature capable of efficiently suppressing volume expansion.

In the present application, the crystal grain means a crystal particle, which is a collection of microscopically irregular shapes in a metal or material, and the crystal grain size may mean the diameter of the observed crystal grain particle. That is, in the present application, the crystal grain size means the size of domains that share the same crystal orientation in a particle, and has a concept different from the grain size or the size of particle diameter, which expresses the size of a material.

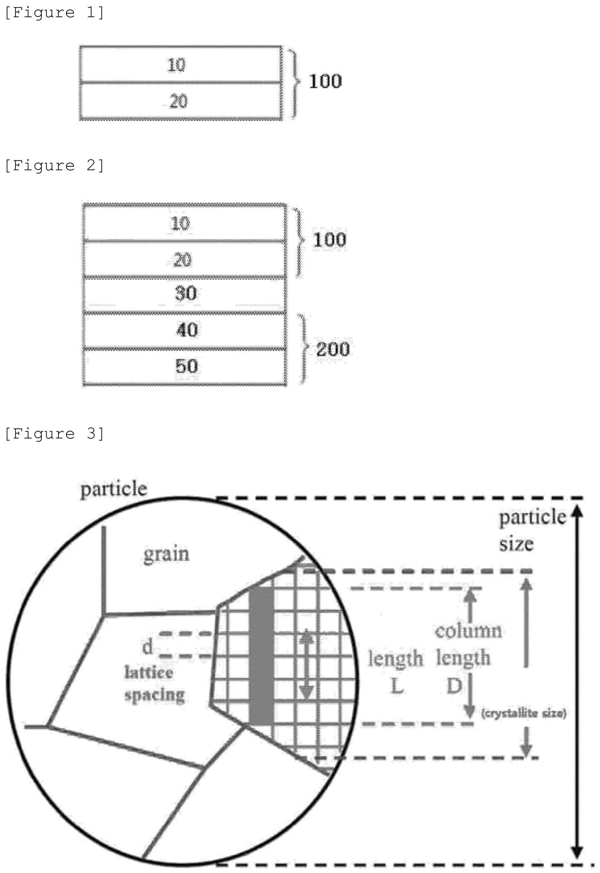

In an exemplary embodiment of the present application, the crystal grain size may be calculated as a Full Width at Half Maximum (FWHM) value through XRD analysis. Specifically, FIG. 3 shows the method of calculating crystal grain size. In FIG. 3, the remaining values except for L are measured through XRD analysis of the silicon-based active material, and the crystal grain size may be measured through the Debey-Scherrer equation, which shows that FWHM and crystal grain size are inversely proportional. In this case, the Debey-Scherrer equation is the same as the following Equation 1-1.

$$\text{[Equation 1-1]}$$

$$\text{FWHM} = K\lambda \ / \ L\text{Cos}\theta$$

In Equation 1-1,
L is the crystal grain size, K is a constant, $\theta$ is the Bragg angle, and $\lambda$ means the wavelength of the X-ray.

Further, the shapes of the crystal grains are various, and thus may be measured three-dimensionally, and generally, the size of the crystal grains may be measured by the circle method and diameter measurement method generally used, but the present invention is not limited thereto.

The diameter measurement method may be performed by drawing 5 to 10 equilibrium lines each having a length of L mm on a micrograph of a particle to be measured, counting the number of crystal grains z on the lines, and averaging the number of crystal grains z. In this case, only those that fit all in are counted and those that cross over the line are excluded. When the number of lines is defined as P and the magnification is defined as V, the average particle diameter may be calculated using the following Equation 1-2.

$$\text{[Equation 1-2]}$$

$$\text{Dm} \ = \ (L*P*10^3)/(zV) \ (\text{um})$$

In addition, in the circle method, the average particle area may be calculated using the following Equation 1-3 by a method of obtaining the average area of crystal grains using the number of crystal grains entering the circle and the number of crystal grains on the boundary line after drawing a circle with a predetermined diameter on a micrograph of a target particle.

$$\text{[Equation 1-3]}$$

$$\text{Fm} \ = \ (Fk \ * \ 10^6) \ /((0.67n \ + \ z) \ V^2)(\text{um}^2)$$

In Equation 1-2, Fm means the average particle area, Fk means the measured area on the photograph, z means the number of particles entering the circle, n means the number of particles on the arc, and V means the magnification of the microscope.

In an exemplary embodiment of the present application, the silicon-based active material may include silicon-based particles having a particle size distribution of 0.01 μm or more and 30 μm or less.

The fact that the silicon-based active material includes silicon-based particles having a particle size distribution of 0.01 μm or more and 30 μm or less means that a large number of individual silicon-based particles having a particle size within the above range are included, and the number of silicon-based particles to be included is not limited.

When the silicon-based particles have a spherical shape, the particle size of the silicon-based particles may be expressed as the diameter of the silicon-based particle, but even in the case of other non-spherical shapes, the particle size may be measured compared to the case of the spherical shape, and in general, the particle size of individual silicon-based particles may be measured by a method measured in the art.

In the present application, provided is a negative electrode active material in which the silicon-based active material has an average particle diameter (D50) of 1 μm or more and 10 μm or less.

Meanwhile, the silicon-based active material of the present invention may have an average particle diameter (D50 particle size) of 1 μm to 10 μm, specifically 5.5 μm to 8 μm, and more specifically 6 μm to 7 μm. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the phenomenon of the non-uniform current density during charging and discharging.

In an exemplary embodiment of the present application, the silicon-based active material generally has a characteristic BET surface area. The BET surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, the silicon-based active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 3-1, where A is the area and P is the boundary line.

$$[\text{Equation } 3\text{-}1]$$

$$4\pi A/P^2$$

The negative electrode active material according to the present application includes a coating layer surrounding at least a portion of the surface of a silicon-based active material, and accordingly, the negative electrode active material according to the present application has a feature that the coating layer acts as a protective layer to prevent hydrogen generation reactions by suppressing the reaction between the surface of the silicon-based active material and a solvent during the formation of a slurry, and can alleviate non-uniform electrode coating due to the generation of bubbles during the coating of electrodes therefrom.

In an exemplary embodiment of the present application, the thickness of the coating layer may satisfy the range of Equation 1.

In the case of the negative electrode active material according to the present application, the thickness of the coating layer is not simply selected within a range, but the thickness of the coating layer is adjusted compared to the average particle diameter (D50) of the silicon-based active material, and accordingly, the negative electrode active material according to the present application has a feature that the pH of the negative electrode active material is appropriately selected, and thus the above-described problems may be solved during storage in the slurry.

That is, the pH of the negative electrode active material is related to the thickness of the coating layer and the thickness of the silicon-based active material, and is affected by the degree of exposure of the silicon-based active material due to the thickness of the coating layer and the difference in the specific surface area due to the D50 of the silicon-based active material, and when the relationship of the above-described Equation 1 is satisfied, the pH of the negative electrode active material itself is suitably formed.

When the thickness of the coating layer satisfies the above range, contact between the solvent and the silicon-based active material may be easily prevented, and by having the above thickness range, electric conductivity may also be improved and the content of the silicon-based active material may also be maximized, so that the negative electrode active material has a feature in which the capacity characteristics are also excellent. That is, when the thickness is less than the range of Equation 1, it is difficult to limit the generation of gas, and when the thickness exceeds the above range, the capacity and efficiency of the active material may decrease, so that it is preferable to select the above range.

In an exemplary embodiment of the present application, provided is a negative electrode active material in which the coating layer has an electric conductivity of 100 mS/m or more and 1,000 mS/m or less.

In the present application, the electric conductivity refers to the ability of a material itself to allow current to flow when an electric field is applied, and may be used as a parameter to express the degree to which current flows well within a material.

The electric conductivity may be measured using a common measurement method used in the art, and the reciprocal of electric conductivity may mean resistivity, and the resistivity may have other values depending on the type and composition of the material.

In an exemplary embodiment of the present application, the coating layer may have an electric conductivity of 100 mS/m or more and 1,000 mS/m or less, preferably 120 mS/m or more and 900 mS/m or less, and more preferably 180 mS/m or more and 800 mS/m or less.

The coating layer according to the present application suppresses a reaction between a silicon-based active material and a slurry solvent as described above, and simultaneously, has high electric conductivity as described above, and since the coating layer may be formed on the surface of the silicon-based active material to lower the resistance of the negative electrode active material, the coating layer according to the present application has a feature capable of improving service life stability by reducing the resistance of the electrode due to the improvement in the electric conductivity of the active material.

In an exemplary embodiment of the present application, provided is a negative electrode active material in which the arrangement area of the coating layer is 90% or more based on the outer surface of the silicon-based active material.

The arrangement area may mean the extent to which the coating layer is coated based on the outer surface of the silicon-based active material. That is, when the coating layer completely surrounds the silicon-based active material, the arrangement area may be 100%, and this case may mean that the surface of the silicon-based active material may be disconnected from the outside, that is, disconnected by the coating layer.

In an exemplary embodiment of the present application, the arrangement area of the coating layer may be 90% or more, 91% or more, or 92% or more based on the outer surface of the silicon-based active material, and may satisfy a range of 100% or less, 99% or less, or 95% or less based on the outer surface of the silicon-based active material.

By having the arrangement area of the coating layer as described above, gas generation may be more easily suppressed, and when included in an electrode in the future, the coating layer has a feature capable of facilitating a role as a silicon-based active material. In particular, the coating layer according to the present application is used to obtain the effect of suppressing gas generation, and when the arrangement area of the carbon coating layer is 100%, the carbon coating layer according to the present application has a feature capable of reducing gas generation because it is possible to block contact with water in a slurry state.

In an exemplary embodiment of the present application, provided is a negative electrode active material in which a carbon-based material in the coating layer includes one or more selected from the group consisting of crystalline carbon; and amorphous carbon.

In an exemplary embodiment of the present application, the carbon coating layer includes crystalline carbon.

In an exemplary embodiment of the present application, the carbon coating layer includes amorphous carbon.

In an exemplary embodiment of the present application, provided is a negative electrode active material in which the carbon coating layer includes a carbon-based material, and the carbon-based material includes carbon with an ID/IG of 0.1 to 1.2 when measurement is performed using Raman spectroscopy.

In another exemplary embodiment, the ID/IG may satisfy a range of 0.1 to 1.2, preferably 0.13 to 1.2.

The ID/IG may mean an index that confirms defects in a carbon structure, and may mean an index that measures the degree of defects in a carbon material by Raman spectroscopy measurement.

By including carbon that satisfies the Raman spectroscopy range as described above, a battery has a feature in which the service life performance is excellent during the subsequent driving of the battery.

In the present application, provided is a negative electrode active material in which a carbon-based material in the coating layer includes one or more selected from the group consisting of graphene; carbon; and graphite.

In an exemplary embodiment of the present application, provided is a negative electrode composition including: the negative electrode active material; a negative electrode conductive material; and a negative electrode binder.

In an exemplary embodiment of the present application, provided is a negative electrode composition in which the negative electrode active material is present in an amount of 40 parts by weight or more based on 100 parts by weight of the negative electrode composition.

In another exemplary embodiment, the negative electrode active material may be included in an amount of 40 parts by weight or more, preferably 60 parts by weight or more, more preferably 65 parts by weight or more, and even more preferably 70 parts by weight or more, and may be included in an amount of 95 parts by weight or less, preferably 90 parts by weight or less, and more preferably 85 parts by weight or less, based on 100 parts by weight of the negative electrode composition.

The negative electrode composition according to the present application has a feature in which by using a negative electrode active material satisfying a specific crystal grain size, which can suppress the volume expansion rate in the charging and discharging process even though a silicon-based active material having a remarkably high capacity is used in the above range, the performance of the negative electrode does not deteriorate and output characteristics at charging and discharging are excellent even though the silicon-based active material is included in the above range.

In the related art, it was common to use only a graphite-based compound as a negative electrode active material, but recently, as the demand for a high-capacity battery has increased, attempts to mix and use a silicon-based active material have been increased in order to increase the capacity. However, in the case of the silicon-based active material, even though characteristics of the silicon-based active material itself are adjusted as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m$^2$/g or more and 70 m$^2$/g or less, preferably 45 m$^2$/g or more and 65 m$^2$/g or less, and more preferably 50 m$^2$/g or more and 60 m$^2$/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent. In particular, in the present invention, as a specific silicon-based active material is used, it is possible to reduce the functional group content of the dotted conductive material, and accordingly, the present invention has an effect excellent in improving dispersibility.

In an exemplary embodiment of the present application, it is characterized in that the dotted conductive material having a functional group content in the above range is included along with the silicon-based active material, and the functional group content may be adjusted according to the degree to which the dotted conductive material is heat-treated.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may serve to improve conductivity by increasing the surface contact between silicon particles in the negative electrode and simultaneously suppress the disconnection of the conductive path due to the volume expansion. The planar conductive material may be expressed as a plate-like conductive material or a bulk conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 μm to 7 μm, specifically 3 μm to 6 μm, and more specifically 3.5 μm to 5 μm. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 µm or more and 2.0 µm or less, a D50 of 2.5 µm or more and 3.5 µm or less, and a D90 of 6.5 µm or more and 15.0 µm or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 1 $m^2$/g or more.

In another exemplary embodiment, the planar conductive material may have a BET specific surface area of 1 $m^2$/g or more and 500 $m^2$/g or less, preferably 5 $m^2$/g or more and 300 $m^2$/g or less, and more preferably 5 $m^2$/g or more and 250 $m^2$/g or less.

As the planar conductive material according to the present application, it is possible to use a high specific surface area planar conductive material; or a low specific surface area planar conductive material.

In still another exemplary embodiment, the planar conductive material is a high specific surface area planar conductive material, and the BET specific surface area may satisfy a range of 50 $m^2$/g or more and 500 $m^2$/g or less, preferably 80 $m^2$/g or more and 300 $m^2$/g or less, and more preferably 100 $m^2$/g or more and 300 $m^2$/g or less.

In yet another exemplary embodiment, the planar conductive material is a low specific surface area planar conductive material, and the BET specific surface area may satisfy a range of 1 $m^2$/g or more and 40 $m^2$/g or less, preferably 5 $m^2$/g or more and 30 $m^2$/g or less, and more preferably 5 $m^2$/g or more and 25 $m^2$/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein refers to, unless otherwise specified, a secondary shape in the form of a bundle or rope in which a plurality of carbon nanotube units are aligned side by side in such an orientation that longitudinal axes of the carbon nanotube units are substantially the same, or are entangled. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In the present application, provided is a negative electrode composition in which the negative electrode conductive material includes at least a linear conductive material.

In an exemplary embodiment of the present application, provided is a negative electrode composition in which the negative electrode conductive material is present in an amount of 10 parts by weight or less based on 100 parts by weight of the negative electrode composition.

In another exemplary embodiment, the negative electrode conductive material may be included in an amount of 0.1 parts by weight or more and 10 parts by weight or less, preferably 0.2 parts by weight or more and 9 parts by weight or less, more preferably 0.4 parts by weight or more and 8 parts by weight or less, and most preferably 0.4 parts by weight or more and 8 parts by weight or less, based on 100 parts by weight of the negative electrode composition.

In an exemplary embodiment of the present application, provided is a negative electrode composition in which the negative electrode conductive material includes a planar conductive material; and a linear conductive material.

In an exemplary embodiment of the present application, provided is a negative electrode composition in which the negative electrode conductive material includes the planar conductive material; and the linear conductive material in amounts of 80 parts by weight or more and 99.99 parts by weight or less and 0.01 parts by weight or more and 20 parts by weight or less, respectively, based on 100 parts by weight of the negative electrode conductive material.

In another exemplary embodiment, the negative electrode conductive material may include the planar conductive material in an amount of 80 parts by weight or more and 99.99 parts by weight or less, preferably 85 parts by weight or more and 99.99 parts by weight or less, and more preferably 95 parts by weight or more and 99.95 parts by weight or less, based on 100 parts by weight of the negative electrode conductive material.

In still another exemplary embodiment, the negative electrode conductive material may include the linear conductive material in an amount of 0.01 parts by weight or more and 20 parts by weight or less, preferably 0.01 part by weight or more and 15 parts by weight or less, and more preferably 0.05 parts by weight or more and 5 parts by weight or less, based on 100 parts by weight of the negative electrode conductive material.

In an exemplary embodiment of the present application, as the negative electrode conductive material includes a planar conductive material and a linear conductive material and the planar conductive material and the linear conductive material each satisfy the composition and ratio, the negative electrode conductive material has a feature in which output characteristics at a high C-rate are excellent and the amount of high-temperature gas generated is reduced because the service life characteristics of the existing lithium secondary battery are not greatly affected and points where the battery can be charged and discharged are increased particularly, when a planar conductive material and a linear conductive material are included.

In an exemplary embodiment of the present application, the negative electrode conductive material may be composed of a linear conductive material.

In particular, when the linear conductive material is used alone, the electrode structure may be improved because the electrode tortuosity, which is a problem with the silicon-based negative electrode, may be simplified, and accordingly, the negative electrode conductive material has a feature capable of reducing the movement resistance of lithium ions in the electrode.

In an exemplary embodiment of the present application, when the negative electrode conductive material includes the linear conductive material alone, the negative electrode conductive material may be included in an amount of 0.05 parts by weight or more and 5 parts by weight or less, preferably 0.1 parts by weight or more and 3 parts by weight or less, and more preferably 0.4 parts by weight or more and 1 parts by weight or less, based on 100 parts by weight of the negative electrode composition.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 $m^2/g$ or more and 4.5 $m^2/g$ or less. In addition, plate-like graphite, which is a planar conductive material, is in a planar form, and may have a BET specific surface area of 5 $m^2/g$ or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polyacrylamide, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 30 parts by weight or less, preferably 25 or less, and more preferably 20 parts by weight or less, and may be included in an amount of 3 parts by weight or more, 5 parts by weight or more and 10 parts by weight or more, based on 100 parts by weight of the negative electrode composition.

In an exemplary embodiment of the present application, provided is a negative electrode for a lithium secondary battery, including: a negative electrode current collector layer; and a negative electrode active material layer including the negative electrode composition according to the present application or a cured product thereof formed on one surface or both surfaces of the negative electrode current collector layer.

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 4 illustrates the negative electrode active material layer formed on one surface, but the negative electrode active material layer may be included on both surfaces of the negative electrode current collector layer.

In an exemplary embodiment of the present application, the negative electrode for a lithium secondary battery may be formed by applying a negative electrode slurry including the negative electrode composition onto one surface or both surfaces of the negative electrode current collector layer and drying the negative electrode slurry.

In this case, the negative electrode slurry may include: the above-described negative electrode composition; and a slurry solvent.

In an exemplary embodiment of the present application, a solid content of the negative electrode slurry may satisfy 5% or more and 60% or less.

In another exemplary embodiment, the solid content of the negative electrode slurry may satisfy a range of 5% or more and 60% or less, preferably 10% or more and 58% or less, and more preferably 15% or more and 55% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the slurry solvent can be used without limitation as long as the slurry solvent can dissolve a negative electrode composition, and specifically, water or NMP may be used.

In an exemplary embodiment of the present application, the negative electrode current collector layer generally has a thickness of 1 $\mu$m to 100 $\mu$m. The negative electrode current collector layer is not particularly limited as long as the negative electrode current collector layer has high conductivity without causing a chemical change in the battery, and for example, it is possible to use copper, stainless steel, aluminum, nickel, titanium, fired carbon, copper or stainless steel of which the surface is treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 $\mu$m or more and 100 $\mu$m or less, and the negative electrode active material layer has a thickness of 5 $\mu$m or more and 500 $\mu$m or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector layer may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a nonaqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium- and large-sized device selected from the group consisting of an electric vehicle, a hybrid electric vehicle, a plug-in hybrid electric vehicle, and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

[Mode for Invention]

### <Preparation Examples>

<Preparation of Negative Electrode Active Material in Example 1>

After 100 g of a powder in which Si and $SiO_2$ were mixed at a molar ratio of 1:1 and 6 g of Mg were mixed in a reaction furnace, the resulting mixture was heated in a vacuum state at 1,500°C. Thereafter, a mixed gas of the vaporized Si, SiO2, and Mg was reacted in a cooling zone in a vacuum state having a cooling temperature of 850°C and condensed into a solid phase.

The silicon-based active material was pulverized using a ball mill to prepare silicon-based particles with a size of 5 microns. Thereafter, the silicon-based particles were heat-treated at a temperature of 850°C in an inert atmosphere to prepare Mg doped SiOx particles.

Thereafter, the silicon composite particles were placed in the hot zone of a CVD apparatus while maintaining an inert atmosphere by flowing Ar gas, and propane gas was blown into the hot zone at 950°C to perform heat treatment such that the thickness of carbon became 0.15 microns.

**<Preparation of Negative Electrode Active Material in Example 2>**

A negative electrode active material was prepared in the same manner as in Example 1, except that the heat treatment time in propane gas was adjusted in the final step such that the thickness of carbon became 0.35 microns.

**<Preparation of Negative Electrode Active Material in Example 3>**

10 g of amorphous porous carbon scaffold with a specific surface area of 1850 to 1900 $m^2/g$, a pore volume of 0.80 to 0.85 $cm^3/g$, and a particle diameter of 6 microns was put into a ceramic crucible and placed in the center of a horizontal tube furnace. After the furnace was sealed and purged with Ar gas, the furnace temperature was increased to 500°C at 10°C/min, and then silane gas and hydrogen gas were allowed to remain in the furnace for 60 to 90 minutes at while varying the flow rate. Additionally, the furnace temperature was increased to 900°C, and then propane gas was allowed to remain in the furnace to perform heat treatment such that the thickness of carbon became 0.3 microns.

**<Preparation of Negative Electrode Active Material in Comparative Example 1>**

A negative electrode active material was prepared in the same manner as in Example 1, except that the carbon coating step was not performed in the last step in Example 1.

**<Preparation of Negative Electrode Active Material in Comparative Example 2>**

A negative electrode active material was prepared in the same manner as in Example 2, except that the heat treatment time in propane gas was adjusted in the final step such that the thickness of carbon became 0.8 microns.

**<Preparation of Negative Electrode Active Material in Comparative Example 3>**

A negative electrode active material was prepared in the same manner as in Example 3, except that the heat treatment time in propane gas was adjusted in the final step such that the thickness of carbon became 1 micron.
The properties of the negative electrode active materials prepared in the Examples and Comparative Examples are as follows.

[Table 1]

| | Silicon-based active material average particle diameter (D50, micron) | Thickness of coating layer | Range of Equation 1 | Negative electrode active material pH |
|---|---|---|---|---|
| Example 1 | 5.2 | 0.15 microns | 0.1 < Equation 1 < 0.52 | 7.6 |
| Example 2 | 5.3 | 0.35 microns | 0.1< Equation 1 < 0.53 | 7.3 |
| Example 3 | 6.3 | 0.3 microns | 0.12 < Equation 1 < 0.63 | 6.6 |
| Comparative Example 1 | 5 | - | - | 9.8 |
| Comparative Example 2 | 5.8 | 0.8 microns | 0.11 < Equation 1 < 0.58 | 7.1 |
| Comparative Example 3 | 7 | 1 micron | 0.14 < Equation 1 < 0.7 | 6.8 |

**<Manufacture of negative electrode>**

Binder synthesis

Acrylamide, acrylic acid and acrylonitrile were mixed at a weight ratio of 60:30:10 in a reactor equipped with a stirrer, a thermometer, a reflux condenser and a nitrogen gas inlet pipe, a polymerization initiator (ammonium persulfate) was added thereto, and the resulting mixture was reacted at 75°C for 6 hours to prepare a binder in an aqueous solution state.

Next, the binder was neutralized with an aqueous NaOH solution to prepare a (meth)acrylic binder.

**Preparation of negative electrode slurry**

The negative electrode active materials prepared in the Examples and Comparative Examples were used as the negative electrode active materials, two types of conductive materials, a particulate conductive material (SFG6L, Graphite) and SWCNTs (product name: Tuball, OCSiAl) were used as the conductive materials, and the aqueous binder synthesized above was used. In this case, the negative electrode active material, the particulate conductive material, the SWCNTs, and the aqueous binder were mixed at a weight ratio of 80:9.6:0.8:9.6 to prepare a negative electrode composition.

A negative electrode slurry was prepared by adding water as a solvent, and herein, the content of water was adjusted in consideration of the coatability, viscosity, and solid content, and the viscosity of the obtained negative electrode slurry was adjusted to 8000 cps.

**<Manufacture of battery>**

A copper foil with a thickness of 18 $\mu$m was coated with the negative electrode slurry and dried, an electrode active material layer with a thickness of 50 $\mu$m was formed on one surface of the copper foil, and the copper foil was punched into circular shapes with a diameter of 14 mm to manufacture a test electrode (negative electrode).

A metal lithium foil with a thickness of 0.33 mm was used as a positive electrode.

A porous polyethylene sheet with a thickness of 0.1 mm was used as a separator. In addition, an electrolyte solution in which $LiPF_6$ as a lithium salt was dissolved at a concentration of about 1 mol/L in a mixed solvent of ethylene carbonate (EC) and diethyl carbonate (DEC) at a volume ratio of 1 : 1 was used as an electrolyte solution.

A coin cell for evaluation with a thickness of 2 mm and a diameter of 32 mm was manufactured by sealing the negative electrode, the positive electrode, the separator, and the electrolyte solution in a stainless steel container.

**Experimental Example 1: Measurement of phase stability (viscosity change) of negative electrode slurry**

5 g of a negative electrode active material or the negative electrode slurry was put into a 9 cm x 9 cm pouch, the pouch was sealed, and then stored in a constant temperature chamber at a high temperature (60°C) for 24 hours, and then the gas in the pouch was collected, the amount of gas generated was measured by GC/MS, and the evaluation results are shown in the following Table 2.

**Experimental Example 2: Evaluation of battery characteristics**

The coin cell manufactured above was charged with a constant current of 0.05 C until the voltage reached 0.01 V, and then discharged with a constant current of 0.05 C until the voltage reached 1.0 V to obtain a discharge capacity, the above process was repeated 100 cycles to calculate a capacity retention rate, and the results are shown in the following Table 2.

[Table 2]

| | Slurry phase stability (amount of $H_2$ gas generated, $\mu$L) | Initial discharge capacity (mAh/g) | Capacity retention rate (%) |
|---|---|---|---|
| Example 1 | 6 | 1200 | 81 |
| Example 2 | 5 | 1300 | 80 |
| Example 3 | 9 | 1750 | 87 |
| Comparative Example 1 | 12000 | 1250 | 76 |
| Comparative Example 2 | 5 | 1050 | 73 |
| Comparative Example 3 | 10 | 1450 | 82 |

As can be confirmed from Tables 1 and 2 above, the negative electrode active materials of Examples 1 to 3 of the present invention had a coating layer having a thickness of Equation 1 formed therein compared to the average particle diameter of the silicon-based active material on the surface of the silicon-based active material.

By having a carbon-based coating layer having a thickness in a range of Equation 1 as described above, the pH of the negative electrode active material itself can be adjusted to 5 or more and 9 or less, and the pH of the negative electrode active material affects a binder included in the negative electrode slurry and the stability of the slurry, so that it was confirmed that the amount of gas generated in the negative electrode slurry state can deteriorate, and accordingly, it could be confirmed that the phase was stabilized and the risk of explosion were reduced.

In the case of Comparative Example 1, no coating layer was formed, and because the amount of hydrogen gas generated was large, it could be confirmed that the phase stability was reduced in a safety evaluation of the slurry.

In the case of Comparative Example 2, the coating layer was formed beyond the range of Equation 1 of the present application, and because a coating layer was formed, it was confirmed that hydrogen gas generation from the slurry was suppressed, but it could be confirmed that the initial discharge capacity and the capacity retention rate during charging and discharging were reduced.

Comparative Example 3 corresponds to a case where the coating layer exceeds the range of Equation 1. That is, it could be confirmed that the generation of hydrogen gas from the slurry was suppressed by forming the coating layer in a predetermined range or more, but it could be confirmed that the initial discharge capacity and the capacity retention rate during charging and discharging were reduced.

**Claims**

1. A negative electrode active material comprising:

    a silicon-based active material; and
    a coating layer provided on a surface of the silicon-based active material,
    wherein the coating layer comprises a carbon-based material, and
    a thickness of the coating layer satisfies the following Equation 1:

    Silicon-based active material average particle diameter (D50) / 70 < Thickness of coating layer < Silicon-based active material average particle diameter (D50) / 10      [Equation 1]

2. The negative electrode active material of claim 1, wherein the silicon-based active material comprises one or more selected from the group consisting of SiOx, wherein x=0, SiOx, wherein 0<x<2, Si/C, and a Si alloy.

3. The negative electrode active material of claim 1, wherein the silicon-based active material comprises one or more selected from the group consisting of SiOx, wherein x=0, and SiOx, wherein 0<x<2, and comprises 70 parts by weight or more of the SiOx, wherein (x=0), based on 100 parts by weight of the silicon-based active material.

4. The negative electrode active material of claim 1, wherein the silicon-based active material has an average particle diameter (D50) of 1 $\mu$m or more and 10 $\mu$m or less.

5. The negative electrode active material of claim 1, wherein the silicon-based active material has a crystal grain size of 200 nm or less.

6. The negative electrode active material of claim 1, wherein a carbon-based material in the coating layer comprises one or more selected from the group consisting of crystalline carbon; and amorphous carbon.

7. The negative electrode active material of claim 1, wherein a carbon-based material in the coating layer comprises one or more selected from the group consisting of graphene; carbon; and graphite.

8. A negative electrode composition comprising:

    the negative electrode active material according to any one of claims 1 to 7;
    a negative electrode conductive material; and
    a negative electrode binder.

9. The negative electrode composition of claim 8, wherein the negative electrode active material is present in an amount of 40 parts by weight or more based on 100 parts by weight of the negative electrode composition.

10. The negative electrode composition of claim 8, wherein the negative electrode conductive material comprises at least a linear conductive material.

11. The negative electrode composition of claim 8, wherein the negative electrode conductive material is present in an amount of 10 parts by weight or less based on 100 parts by weight of the negative electrode composition.

12. A negative electrode for a lithium secondary battery, comprising:

a negative electrode current collector layer; and
a negative electrode active material layer provided on one surface or both surfaces of the negative electrode current collector layer,
wherein the negative electrode active material layer comprises the negative electrode composition according to claim 8 or a cured product thereof.

13. The negative electrode of claim 12, wherein the negative electrode current collector layer has a thickness of 1 $\mu$m or more and 100 $\mu$m or less, and
the negative electrode active material layer has a thickness of 5 $\mu$m or more and 500 $\mu$m or less.

14. A lithium secondary battery comprising:

a positive electrode;
the negative electrode for a lithium secondary battery according to claim 12;
a separator provided between the positive electrode and the negative electrode; and
an electrolyte.

[Figure 1]

[Figure 2]

[Figure 3]

## INTERNATIONAL SEARCH REPORT

| | International application No. |
|---|---|
| | **PCT/KR2024/020932** |

| | |
|---|---|
| **A.** | **CLASSIFICATION OF SUBJECT MATTER** |

**H01M 4/36**(2006.01)i; **H01M 4/38**(2006.01)i; **H01M 4/48**(2010.01)i; **H01M 4/62**(2006.01)i; **H01M 4/133**(2010.01)i; **H01M 10/052**(2010.01)i; **H01M 4/02**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/36(2006.01); C01B 32/05(2017.01); H01M 10/052(2010.01); H01M 4/13(2010.01); H01M 4/38(2006.01); H01M 4/58(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(anode active material), 실리콘(silicone), 탄소(carbon), 코팅(coating), 두께(thickness)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2016-0040104 A (LG CHEM, LTD.) 12 April 2016 (2016-04-12)<br>See claims 1 and 7; paragraphs [0038], [0057], [0125] and [0202]; and example 2, table 1. | 1-14 |
| A | KR 10-2015-0087751 A (ORANGE POWER LTD.) 30 July 2015 (2015-07-30)<br>See claim 1; and figure 1a. | 1-14 |
| A | KR 10-2022-0071442 A (HYUNDAI MOTOR COMPANY et al.) 31 May 2022 (2022-05-31)<br>See claims 1-20. | 1-14 |
| A | KR 10-2021-0149970 A (DAE JOO ELECTRONIC MATERIALS CO., LTD.) 10 December 2021 (2021-12-10)<br>See claims 1-30. | 1-14 |
| A | WO 2017-216558 A1 (NEXEON LIMITED) 21 December 2017 (2017-12-21)<br>See claims 1-66. | 1-14 |

| | | | | |
|---|---|---|---|---|
| ☐ Further documents are listed in the continuation of Box C. | | ☑ See patent family annex. | | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2025** | **08 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/020932** |

| Patent document cited in search report | | | Publication date (day/month/year) | Patent family member(s) | | | Publication date (day/month/year) |
|---|---|---|---|---|---|---|---|
| KR | 10-2016-0040104 | A | 12 April 2016 | KR | 10-1763478 | B1 | 31 July 2017 |
| | | | | US | 2017-0222222 | A1 | 03 August 2017 |
| | | | | WO | 2016-053031 | A1 | 07 April 2016 |
| KR | 10-2015-0087751 | A | 30 July 2015 | KR | 10-1614018 | B1 | 20 April 2016 |
| KR | 10-2022-0071442 | A | 31 May 2022 | CN | 114551821 | A | 27 May 2022 |
| | | | | US | 2022-0166008 | A1 | 26 May 2022 |
| KR | 10-2021-0149970 | A | 10 December 2021 | | None | | |
| WO | 2017-216558 | A1 | 21 December 2017 | CN | 109417163 | A | 01 March 2019 |
| | | | | CN | 109417163 | B | 17 June 2022 |
| | | | | EP | 3469644 | A1 | 17 April 2019 |
| | | | | EP | 3469644 | B1 | 09 November 2022 |
| | | | | EP | 4167312 | A2 | 19 April 2023 |
| | | | | EP | 4167312 | A3 | 03 May 2023 |
| | | | | EP | 4167312 | B1 | 18 September 2024 |
| | | | | EP | 4468397 | A2 | 27 November 2024 |
| | | | | ES | 2993278 | T3 | 26 December 2024 |
| | | | | GB | 2551369 | A | 20 December 2017 |
| | | | | GB | 2551369 | B | 17 October 2018 |
| | | | | JP | 2019-522872 | A | 15 August 2019 |
| | | | | JP | 6995786 | B2 | 17 January 2022 |
| | | | | KR | 10-2019-0018680 | A | 25 February 2019 |
| | | | | KR | 10-2413416 | B1 | 27 June 2022 |
| | | | | US | 11127945 | B2 | 21 September 2021 |
| | | | | US | 2019-0148718 | A1 | 16 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190996
- JP 2009080971 A